# EUROPÄISCHE PATENTSCHRIFT

(11) **EP 2 794 225 B1**
(45) Veröffentlichungstag und Bekanntmachung des Hinweises auf die Patenterteilung: **11.04.2018**
(21) Anmeldenummer: 12805654.6
(22) Anmeldetag: 06.12.2012
(51) Int. Cl.: B29C 45/26, B29C 45/00, B29L 1/00, B29K 81/00, B29K 105/12, B29K 77/00

(54) **VERFAHREN ZUR HERSTELLUNG EINES HOHLZYLINDRISCHEN SCHRAUBTEILS**
METHOD FOR THE PRODUCTION OF A HOLLOW-CYLINDRICAL SCREW PART
PROCÉDÉ DE FABRICATION D'UNE PIÈCE FILETÉE CYLINDRIQUE CREUSE

(30) Priorität: 19.12.2011 DE 102011056601
(43) Veröffentlichungstag der Anmeldung: 29.10.2014
(73) Patentinhaber: Voss Automotive GmbH, 51688 Wipperfürth (DE)
(72) Erfinder: DE BEER, Daniel, 51766 Engelskirchen (DE); SIEPER, Günter, 42853 Remscheid (DE)
(74) Vertreter: Patent- und Rechtsanwälte Dr. Solf & Zapf
(86) Internationale Anmeldenummer: PCT/EP2012/074655
(87) Internationale Veröffentlichungsnummer: WO 2013/092234

(56) Entgegenhaltungen:
- DE-A1-102008 018 514
- JP-A- 2003 035 355
- KR-B1- 101 091 067
- US-A- 4 403 933
- US-A1- 2007 200 279
- MOERWALD K: "EINBLICK IN DIE KONSTRUKTION VON SPRITZGUSSWERKZEUGEN", KUNSTSTOFF RUNDSCHAU, VERLAG FUR PUBLIZITAET. ISERNHAGEN HB/HANNOVER, DE, Nr. 1, 1. Januar 1962 (1962-01-01), Seiten 8-14, XP009050568,
- C. Mattheck ET AL: "Die Methode der Zugdreiecke im Vergleich mit anderen Kerbformen", , 1. Januar 2008 (2008-01-01), Seiten 1-1, XP055056023, Gefunden im Internet: URL:http://bibliothek.fzk.de/zb/berichte/M attheck-Poster-081029.pdf [gefunden am 2013-03-11]

## Beschreibung

Die vorliegende Erfindung betrifft ein Verfahren zur Herstellung eines Formteils mit ringförmigem Querschnitt, wie einer Schraube, einer Mutter, eines Muffenteils, eines Rohrsteckers, eines Rohrverbinders oder dergleichen, wobei das Formteil einen hohlzylindrischen Grundkörper aufweist, in dessem zur dichtenden Aufnahme eines Steckerteils bestimmtem Innenkanal sich in axialer Richtung Abschnitte mit unterschiedlicher Funktion, und zwar zur Anlage einer Umfangsdichtung, zur direkten oder indirekten Halterung und/oder Arretierung des Steckerteils und/oder zur Stützung und/oder Führung des Steckerteils, aneinander reihen, und wobei der Grundkörper mindestens ein Innengewinde und/oder ein Außengewinde trägt, wobei eine Fasern enthaltende plastifizierte polymere Masse durch mindestens eine Einspritzöffnung eines Formwerkzeugs in eine Kavität des Formwerkzeugs eingespritzt und nach einem Erstarren der polymeren Masse das Formteil aus dem Werkzeug entformt wird.

Das Spritzgießen ist ein bekanntes, insbesondere für Kunststoffe eingesetztes, diskontinuierliches Urformverfahren. Das Spritzgießen gestattet es, industriell unmittelbar einsetzbare Formteile mit großer Stückzahl und mit hoher Genauigkeit herzustellen. Dazu wird in einer Spritzeinheit einer Spritzgießmaschine der jeweilige Werkstoff, bzw. die Formmasse, plastifiziert und in ein Spritzgusswerkzeug eingespritzt. Moderne Spritzgießmaschinen arbeiten mit einer Schnecke, die die Formmasse plastifiziert, fördert und in das Werkzeug einspritzt. In der Kavität bzw. Formhöhlung des Werkzeugs kommt es zu einem Erstarren der polymeren Masse, wonach das Formteil aus dem Werkzeug entformt werden kann. Eine beim Erstarren entstehende Volumenschwindung kann zwar grundsätzlich - jedoch nur bis zu einem bestimmten Maß - durch einen vor der Entnahme aufgebrachten Nachdruck ausgeglichen werden. Durch Spritzgießen können Thermoplaste, Duroplaste und Elastomere verarbeitet werden. Es ist auch bekannt, beim Spritzguss von Thermoplasten Fasern enthaltende Massen einzusetzen, wodurch vergleichsweise höherfeste Formteile hergestellt werden können.

Ein Verfahren und ein Formteil der eingangs genannten Art sind aus der WO 2009/124994 A1 bekannt. Ein ähnliches Formteil beschreibt auch die DE 10 2010 010 651 A1, wobei dessen Besonderheit darin besteht, dass der Grundkörper des Formteils einerseits und vorhandene Gewindesicherungen und/oder Umfangsdichtungen andererseits aus unterschiedlichen polymeren Werkstoffen in einem Mehrkomponenten-Spritzgießverfahren hergestellt werden.

Gemäß dem aus der WO 2009/124994 A1 bekannten Verfahren ist vorgesehen, dass das Einspritzen in die Kavität durch mindestens zwei Einspritzöffnungen derart erfolgt, dass sich die Fasern vorwiegend in entsprechend den Hauptbeanspruchungsrichtungen axialer Zug und Torsion des Formteils ausrichten. Die Einspritzung erfolgt dabei in axialer Richtung, wobei die Masse ringförmig einen inneren Kern des Werkzeugs umströmt und zwischen den Einspritzöffnungen zusammenfließt. An diesen Stellen entstehen Bindenähte, die in der Regel geringere Festigkeiten aufweisen als der übrige Körper des Formteils. Die beanspruchsgerechte Struktur des bekannten Formteils besteht darin, dass einerseits ein Anteil von Fasern, die in umfangsgemäßer Richtung des ringförmigen Querschnitts rechtwinklig zu einer Längsachse des Formteils orientiert sind, und andererseits auch ein Anteil von Fasern, die in axialer Richtung des Formteils orientiert sind, jeweils kleiner ist als 50 Prozent. Mit dem Verfahren kann überraschenderweise ein negativer Bindenahteinfluss zumindest teilweise kompensiert werden. Jedoch hat es sich gezeigt, dass im industriellen Einsatz, insbesondere bei Schraubteilen, oft die Bedeutung der Beanspruchung des Formteils auf Torsion hinter der Bedeutung der Beanspruchung des Formteils auf axialen Zug zurücktritt, wobei dabei insbesondere das maximal ohne Bruch beim Ein- oder Aufschrauben des Formteils aufnehmbare Drehmoment eine signifikante Rolle spielt. Daraus resultiert im Besonderen eine Forderung nach erhöhter Scherfestigkeit sowie eine Erhöhung der Nachdruckwirksamkeit. Unter Nachdruckwirksamkeit versteht man dabei insbesondere, dass durch den aufgebrachten Nachdruck eine homogene Füllung der Kavität, frei von Hohlräumen und - falls Bindenähte vorhanden sind - mit hoher Bindenahtfestigkeit, erfolgt. Bei dem beschriebenen bekannten Mehrfach-Anschnitt kann, wenn Heißkanaldüsen eingesetzt werden, ohne zusätzliche prozessstabilisierende Maßnahmen nicht in jedem Fall eine prozesssichere gleichmäßige Füllung der Kavität gewährleistet werden.
Der vorliegenden Erfindung liegt die Aufgabe zu Grunde, ein prozesssicheres Verfahren der eingangs genannten Art zu schaffen, durch das bei technologisch einfacher Durchführbarkeit ein Formteil mit ringförmigem Querschnitt, wie eine Mutter, ein Muffenteil, ein Rohrstecker, ein Rohrverbinder oder dergleichen, mit erhöhter Festigkeit, insbesondere mit axialer Zugfestigkeit, herstellbar ist.

Erfindungsgemäß wird diese Aufgabe mit einem Verfahren gemäß Anspruch 1 sowie mit einem Verfahren gemäß Anspruch 5 gelöst. Das Einspritzen in die Kavität kann dabei mit Vorteil im Tunnel-, Ring-, Scheiben- oder Schirmanschnitt erfolgen, wobei im Tunnelanschnitt mindestens ein Zweipunkt-Anguss, bevorzugt bis zu einem Fünf-Punkt-Anguss, insbesondere ein Dreipunkt-Anguss, erfolgen kann. Hierbei kann das Einspritzen in die Kavität durch mindestens zwei Einspritzöffnungen vorgenommen werden, die auf dem ringförmigen Innenquerschnitt des Formteils umfangsgemäß gleichmäßig verteilt liegen.
Des Weiteren wird diese Aufgabe erfindungsgemäß im Hinblick auf das insbesondere nach dem erfindungsgemäßen Verfahren herstellbare Formteil dadurch gelöst, dass der Grundkörper an der Wandung des Innenkanals Anspritzstellen aufweist, die in einem Abschnitt oder in einem Bereich eines Abschnitts angeordnet sind, der nicht der Anlage einer Umfangsdichtung oder der Halterung und/oder Arretierung des Steckerteils dient.
Dabei sind die Fasern im Grundkörper, insbesondere auch in inneren oder äußeren Ausnehmungen, wie Umfangsnuten, und/oder an inneren oder äußeren Stufen, wie radialen Vor- oder Rücksprüngen, sowie in den Gewindeflanken bevorzugt vorwiegend parallel zur axialen Richtung des Formteils ausgerichtet. Die Anspritzstellen können dabei mit Vorteil wirkungsnah zu Bereichen positioniert werden, in denen bei der Montage und im Einsatzfall des Formteils die höchsten Belastungen auftreten. Durch einen geringen Abstand des Anschnitt-Bereiches zu den belasteten Bereichen sowie zu Bereichen, in denen das Schraubteil optional filigrane Strukturen, wie beispielsweise einen noch näher zu beschreibenden Halteansatz, aufweist, können eine optimale Nachdruckwirksamkeit - und somit auch Bauteilfestigkeit - realisiert werden.
Dadurch, dass sich die Anspritzstellen in Abschnitten oder Bereichen befinden, die im Hinblick auf Abdichtung oder Halterung gewissermaßen funktionslos sind, d. h. insbesondere nicht mit Dichtflächen in Berührung stehen, ist es mit Vorteil nicht notwendig, an diesen Stellen technologisch aufwändige Nacharbeiten, insbesondere zur Entfernung von Angussgraten und/oder zur Glättung der Oberfläche vorzunehmen.
Die Erfindung beruht auf einer vorteilhaften Verknüpfung von Form und Funktion des Formteils bzw. seiner verschiedenen im Innenkanal gelegenen Abschnitte und Bereiche, mit einer speziellen, aus dem Inneren des zu formenden Teils heraus realisierten Anspritztechnik und Geometrie. Durch die Erfindung erhöht sich vorteilhafterweise ein Torsionsmoment, dem das Formteil bei einer in einem Einschraubversuch auftretenden Beanspruchung standhält, um 40 Prozent bis zu etwa 60 Prozent gegenüber einem Bauteil, das nach einem Verfahren gemäß der WO 2009/124994 A1 hergestellt wurde.
Als besonders geeignet für den Anschnitt werden dabei Anspritzstellen betrachtet, die zwischen Haltebereichen, also axialen Abschnitten mit der Funktion der direkten oder indirekten Halterung und/oder Arretierung des Steckerteils, und Dichtbereichen, also axialen Abschnitten mit der Funktion als Anlagebereiche für eine Umfangsdichtung, liegen. Solche bevorzugten Anspritzstellen können folglich insbesondere - ohne darauf beschränkt zu sein - in solchen Abschnitten liegen, die ausschließlich der Stützung und/oder Führung des Steckerteils dienen.

Im Hinblick darauf, dass das Formteil als Schraubteil, wie bevorzugt eine Schraube oder eine Mutter, ausgebildet ist, wobei es mindestens eine Gewinde aufweist, kann erfindungsgemäß nach dem Einspritzen in die Kavität eine höhere Nachdruckwirksamkeit im Bereich von später zu belastenden Bauteilbereichen, wie Gewindeflanken, insbesondere also im Einschraubbereich gegenüber einem Drehmomentenübertragungsbereich, erzielt werden. Dies resultiert vor allem aus einer sich beim Spritzgießen sehr homogen und im Falle insbesondere eines Ring-, Scheiben- oder Schirmangusses auch bindenahtfrei ausbildenden Struktur, vorzugsweise in einem äußeren Gewindebereich sowie im Bereich innerer oder äußerer Ausnehmungen, wie Umfangsnuten, und/oder im Bereich innerer oder äußerer Stufen, wie radialen Vor- oder Rücksprüngen.
Weitere vorteilhafte Ausgestaltungsmerkmale der Erfindung sind in den Unteransprüchen sowie der folgenden Beschreibung enthalten.
Anhand mehrerer bevorzugter Ausführungsbeispiele soll im Folgenden die Erfindung näher erläutert werden. Dabei zeigen:
- Fig. 1: in Seitenansicht, eine erste Ausführung eines Formteils mit ringförmigem Querschnitt, herstellbar nach einem erfindungsgemäßen Spritzgussverfahren,
- Fig. 2: eine Unteransicht des in Fig. 1 dargestellten Formteils, inklusive des noch nicht entfernten Angusses,
- Fig. 3: einen Schnitt durch das in Fig. 1 und 2 dargestellte Formteil entlang der Linie III-III in Fig. 1 bzw. Fig. 2, inklusive des noch nicht entfernten Angusses,
- Fig. 4: eine ähnliche Schnittdarstellung des Formteils wie in Fig. 3, jedoch im Montagezustand mit einem Steckerteil,
- Fig. 5: eine Darstellung eines weiteren Formteils, das wie in Fig. 4 im Montagezustand gezeigt ist,
- Fig. 6: eine Draufsicht auf eine zweite Ausführung eines Formteils mit ringförmigem Querschnitt, das insbesondere nach einem erfindungsgemäßen Spritzgussverfahren herstellbar ist,
- Fig. 7: einen Schnitt durch das in Fig. 5 dargestellte Formteil entlang der Linie VI-VI in Fig. 5, inklusive des noch nicht entfernten Angusses,
- Fig. 8: eine schematische Darstellung zur Konstruktion eines Übergangs von einem Grundkörper zu einem Flanschansatz des Formteils,
- Fig. 9: eine weitere Ausführung eines Formteils im Montagezustand, in einer Darstellung wie in Fig. 4 und 5.
In den verschiedenen Figuren der Zeichnung sind gleiche Teile stets mit den gleichen Bezugszeichen versehen, so dass sie in der Regel auch nur einmal beschrieben werden.

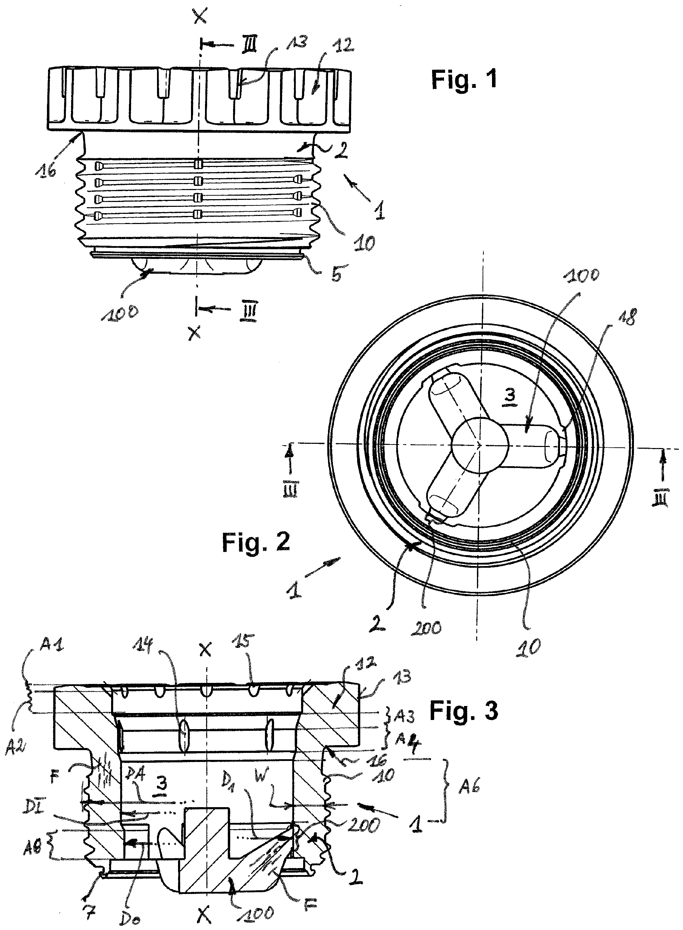

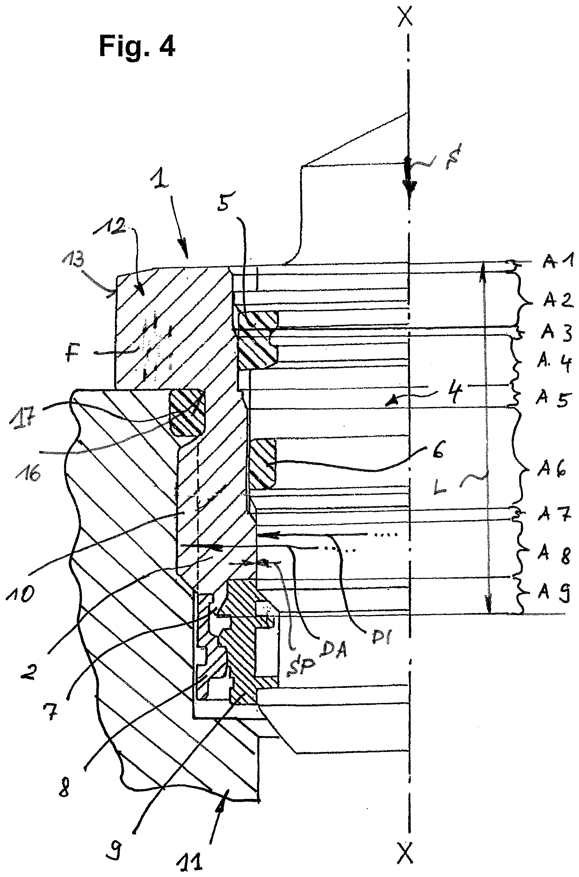

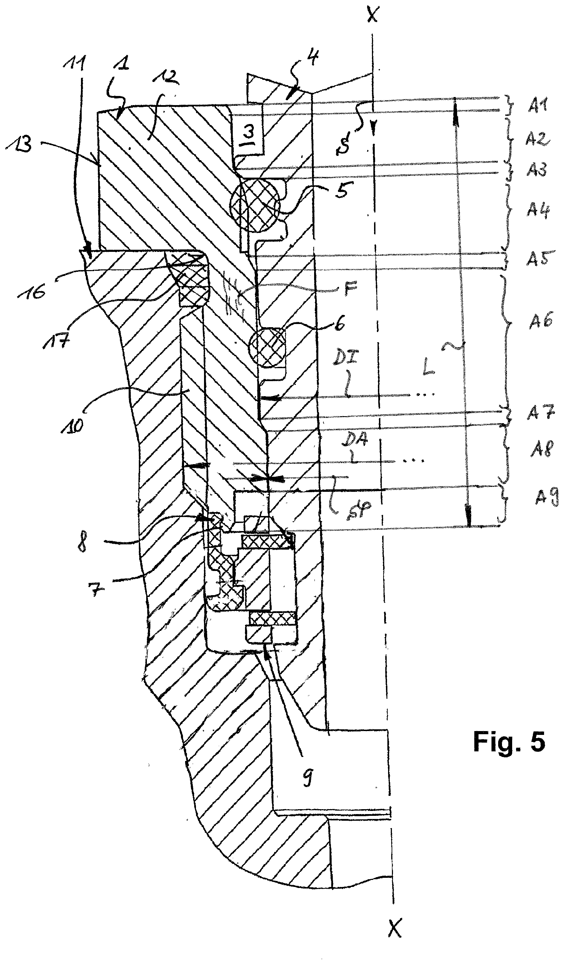

Fig. 1 bis 5 zeigen eine erste Ausführung eines Formteils 1, das - wie die Unteransicht in Fig. 2 veranschaulicht - einen ringförmigen Querschnitt aufweist. Insbesondere handelt es sich um eine Hohlschraube, die nach einem erfindungsgemäßen Spritzgussverfahren herstellbar ist.
Das Formteil 1 weist einen hohlzylindrischen Grundkörper 2 auf, in dessen Innenkanal 3, der, wie insbesondere Fig. 4 und 5 veranschaulichen, zur dichtenden Aufnahme eines Steckerteils 4 bestimmt ist, sich in axialer Richtung X-X Abschnitte A1, A2, A3, A4, A5, A6, A7, A8, A9 mit jeweils unterschiedlicher Funktion aneinander reihen, wie Abschnitte A4, A6 zur Anlage einer oder mehrerer Umfangsdichtungen 5, 6, welche sich insbesondere am Steckerteil 4 befinden können, ein oder gegebenenfalls auch mehrere Abschnitte, wie der Halteabschnitt A9, zur direkten oder indirekten Halterung und/oder Arretierung des Steckerteils 4 und/oder konische Abschnitte A1, A3, A5, A7 oder zylindrische Abschnitte A2, A8 zur Stützung und/oder Führung des Steckerteils 4.
Beispielsweise befindet sich in der dargestellten Ausführung in dem endständigen Halteabschnitt A9 am Außenumfang des Grundkörpers 2 eine insbesondere filigran ausgebildete Außenringwulst 7, an der zur indirekten Halterung und/oder Arretierung des Steckerteils 4 ein vorzugsweise ringförmiger Verriegelungskäfig 8 befestigbar, insbesondere aufrastbar, ist, der mit mindestens einem Verriegelungselement 9 auf dem Steckerteil 4 zusammenwirkt. Fig. 4 und 5 zeigen dabei, dass diese indirekte Halterung und/oder Arretierung auf unterschiedliche Art und Weise realisiert werden kann, wobei bezüglich der Einzelheiten der in Fig. 5 dargestellten technischen Lösung in vollem Umfang auf die EP 0 913 618 B1 verwiesen wird.
Am Grundkörper 2 befindet sich auch mindestens ein Innengewinde und/oder - wie dargestellt - ein Außengewinde 10. Über dieses Außengewinde 10 ist das erfindungsgemäße Formteil 1, wie Fig. 4 zeigt, mit einem anderen Bauteil 11 verschraubbar.

Zur Herstellung eines Formteils 1 wird eine Fasern F enthaltende plastifizierte polymere Masse durch mindestens eine Einspritzöffnung eines (nicht dargestellten) Formwerkzeugs in einen Hohlraum, eine sogenannte Kavität, des Formwerkzeugs eingespritzt und nach einem Erstarren der polymeren Masse das Formteil 1 aus dem Werkzeug entformt.

Erfindungsgemäß erfolgt das Einspritzen in die Kavität radial aus dem Innenkanal 3 nach außen, wobei das Einspritzen durch die Einspritzöffnung - wie nachfolgend noch im Detail ausgeführt wird - in einem Abschnitt oder in einem Bereich eines Abschnitts erfolgt, der nicht der Anlage einer Umfangsdichtung 5, 6 oder der Halterung und/oder Arretierung des Steckerteils 4 dient.

Bei der plastifizierten polymeren Masse kann es sich um ein Harz handeln, welches eine duroplastische Matrix des Formteils 1 bildet. Hierbei kann die plastifizierte polymere Masse ein Epoxidharz (EP), ein ungesättigtes Polyesterharz (UP), ein Vinylesterharz (VE), ein Phenol-Formaldehydharz (PF), ein Diallylphthalatharz (DAP), ein Methacrylatharz (MMA), ein Polyurethan (PUR), ein Aminoharz, ein Melaminharz (MF/MP) oder ein Harnstoffharz (UF) sein.

Formteile 1 mit duroplastischer Matrix lassen sich nach dem Aushärten bzw. dem Vernetzen der Matrix nicht mehr umformen. Sie weisen jedoch einen hohen Temperatureinsatzbereich und höchste Festigkeiten auf. Dies gilt besonders für heißhärtende Systeme, die unter hohen Temperaturen ausgehärtet werden.

In bevorzugter Ausbildung ist die plastifizierte polymere Masse jedoch ein Kunststoff, welcher eine thermoplastische Matrix des Formteils 1 bildet. In einem solchen Fall sind zwar grundsätzlich alle üblicherweise für konstruktive Zwecke eingesetzten Thermoplaste verwendbar, jedoch ist es von besonderem Vorteil, wenn der Kunststoff ein Polyamid (PA), insbesondere ein Polyphtalamid (PPA), ein Polypropylen (PP), ein Polyetheretherketon (PEEK), ein Polyphenylensulfid (PPS), ein Polysulfon (PSU), wie bevorzugt ein Polyphenylsulfon (PPSU) oder ein Polyethersulfon (PES), ein Polyetherimid (PEI), ein Polyethylenterephtalat (PET) oder ein Polybutylenterephtalat (PBT) sein kann.

Faserverstärkte Kunststoffe mit einer thermoplastischen Matrix lassen sich nachträglich noch umformen oder verschweißen. Nach dem Abkühlen sind die Formteile 1 einsatzbereit, erweichen jedoch bei erhöhter Temperatur. Mit zunehmendem Fasergehalt sinkt dabei ihre Neigung zum Kriechen. Der Vorteil der als besonders bevorzugt genannten thermoplastischen Werkstoffe besteht dabei insbesondere in einer hohen Matrixfestigkeit und Einsatzmöglichkeit bei erhöhter Temperaturbelastung.

Die Fasern sind in den Schnittdarstellungen von Fig. 3, 4, 5 und 6 angedeutet und mit dem Bezugszeichen F bezeichnet. Als Fasern F können amorphe Fasern F, wie Glasfasern, anisotrope Fasern F, wie Kohlenstofffasern, und/oder Aramidfasern eingesetzt werden. Die plastifizierte polymere Masse kann dabei einen Volumenanteil an Fasern F im Bereich von 2,5 bis 75 Prozent, vorzugsweise im Bereich von 15 bis 40 Prozent, bzw. einen Masseanteil von 30 bis 75 Prozent, vorzugsweise 50, 60 oder 65 Masseprozent Glasfasern, enthalten. Die Fasern F können, insbesondere in einer Ausführung als Glasfasern, eine Länge im Bereich von 0,1 mm bis 10 mm, vorzugsweise als sogenannte Kurzfasern im Bereich von 0,2 bis 0,5 mm, aufweisen, oder als Langfasern eine Länge im Bereich von 1,0 bis 10,0 mm.

Es hat sich im Sinne einer hohen Bauteilstabilität als günstig erwiesen, wenn das Einspritzen in die Kavität derart - also beispielsweise in der Nähe der Stirnseiten des Formteils 1 - erfolgt, dass sich die Fasern F im Grundkörper 2 in einer günstigen Weise für eine später beim Einschrauben durch ein Einschraubwerkzeug auftretende Torsionsbeanspruchung vorwiegend parallel, d. h. insbesondere bei Glasfasern zu mehr als 50 Prozent, zur axialen Richtung X-X ausrichten. Dies kann beispielsweise durch eine computertomographische Röntgenanalyse nachgewiesen werden. Hierzu ist zu bemerken, dass bei der genannten Beanspruchung zwar durch das Werkzeug ein Torsionsmoment aufgebracht wird, dass jedoch über die in den Gewindegängen des Schraubteils 1 beim Einschrauben auftretenden Kräfte auch mechanische Axialspannungen entstehen, so dass im maximal belasteten Bereich in der Nähe des Kraftangriffs ein dreiachsiger Spannungszustand mit hohen axialen Kräften auftritt.

Die Fasern F können einen mittleren Durchmesser im Bereich von etwa 3 bis 35 µm, vorzugsweise im Bereich von 5 bis 20 µm, aufweisen.

Bei amorphen Fasern F besteht der Vorteil der Faserform nahezu allein in der Nutzung des Größeneffekts. Der Elastizitätsmodul des kompakten Werkstoffs und der Elastizitätsmodul der Faser F sind etwa gleich, wobei aber grundsätzlich angestrebt werden sollte, dass die Fasern F in ihrer Längserstreckungsrichtung einen höheren Elastizitätsmodul und eine höhere Zugfestigkeit aufweisen als die erstarrte polymere Masse. Auch sollte die Bruchdehnung der Matrix höher sein als die der Fasern F. Amorphe Fasern, die aus der Schmelze abgezogen werden, haben jedoch den Vorteil, dass an ihrer Oberfläche beim Abkühlen Druckeigenspannungen entstehen, durch die dem Entstehen von Anrissen der Faser F vorgebeugt werden kann.

Anisotrope Fasern, insbesondere Kohlenstofffasern, werden eingesetzt, wenn hohe massebezogene Festigkeiten und Steifigkeiten gefordert sind. Bei Kohlenstofffasern, die üblicherweise einen Durchmesser von etwa 5 bis 8 µm aufweisen und heute in überwiegendem Maß aus Polyacrylnitril gefertigt werden, sind die Festigkeit und Steifigkeit in Faserrichtung wesentlich höher als quer zur Faserrichtung. Ihr wesentliches Merkmal ist dabei eine hohe Zugfestigkeit. Auch ist der Einsatz handelsüblicher Flachfasern möglich.

Erfindungsgemäß kann auch vorgesehen sein, dass als Fasern F Aramidfasern eingesetzt werden. Als Aramide oder aromatische Polyamide werden nach einer Definition der U.S. Federal Trade Commission langkettige synthetische Polyamide bezeichnet, bei denen mindestens 85 Prozent der Amidgruppen direkt an zwei aromatische Ringe gebunden sind. Aramidfasern weisen, ähnlich wie auch Kohlenstofffasern, einen negativen Wärmeausdehnungskoeffizienten auf, werden also bei Erwärmung kürzer. Ihre spezifische Festigkeit und ihr Elastizitätsmodul sind niedriger als die von Kohlenstofffasern. In Verbindung mit dem positiven Ausdehnungskoeffizienten des Materials der Matrix lassen sich jedoch hoch maßhaltige Formteile 1 fertigen. Gegenüber kohlenstofffaserhaltigen Formteilen 1 ist die Druckfestigkeit solcher Formteile 1 jedoch geringer.

Als exemplarisch für einen Werkstoff mit ausgezeichneter Eignung für das erfindungsgemäße Verfahren bzw. das erfindungsgemäße Formteil 1 sei hier ein mit 50 Masseprozent Glasfasern (Länge: 0,3 mm, Durchmesser: 10 µm) verstärkter thermoplastischer Konstruktionswerkstoff genannt, der auf der Basis eines teilkristallinen, partiell aromatischen Copolyamids hergestellt ist. Dieser Werkstoff, der unter den Namen PA 6T/6I (nach ISO) oder Polyphtalamid (nach ASTM) bzw. z. B. unter dem Handelsnamen "Grivory HTV-5H1 schwarz 9205" bekannt ist, zeichnet sich durch eine im Vergleich mit anderen Polyamiden höhere Festigkeit und Steifheit sowie eine bessere Chemikalien- und Wärmeformbeständigkeit aus.

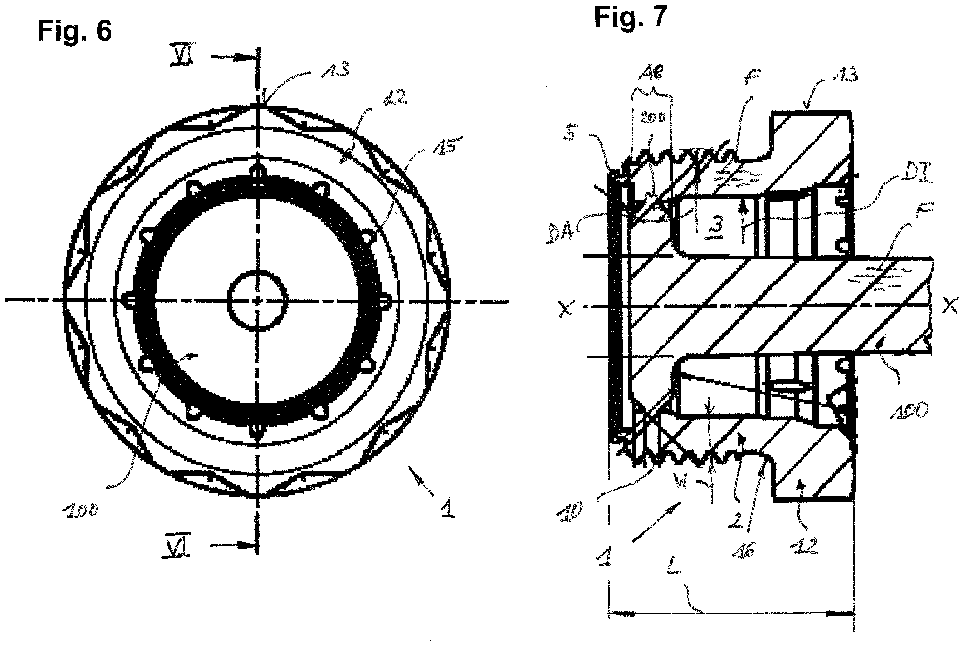

Im Gegensatz zum Kalandrieren, mit dem in der Regel nur ebene Schichten uniformer Dicke erzeugt werden, bestimmt beim Spritzgießen die Kavität des Werkzeugs die Form und die Oberflächenstruktur des fertigen Teils 1, so dass dadurch Formteile mit ringförmigem Querschnitt in einem Arbeitsgang herstellbar sind. Beim Einspritzen in die Kavität können an bzw. in dem Formteil 1 das oder die Gewinde 10, sowie innere Ausnehmungen, äußere Ausnehmungen, wie Umfangsnuten, innere Stufen (Übergang A8/A9) oder äußere Stufen (Übergang 2/12), wie radiale Vor- oder Rücksprünge, und/oder konische Abschnitte A1, A3, A5, A7 ausgebildet werden. So können beim Einspritzen im Grundkörper 2 des hohlzylindrischen Formteils 1 z. B. auch axiale Abschnitte mit unterschiedlicher Wandstärke W (Fig. 3, 7) ausgebildet werden. Bei über die axiale Länge L des Formteils 1 gleichbleibendem Außendurchmesser (allgemein in Fig. 3, 4, 5, 6 und 7 mit dem Bezugszeichen DA bezeichnet) ist dies beispielsweise der Fall, insofern die Abschnitte A1, A2, A3, A4, A5, A6, A7, A8, A9, die sich über die Länge L des Innenkanals 3 axial aneinander reihen, mit unterschiedlichen Innendurchmessern (allgemein in Fig. 3, 4, 5 und 7 mit dem Bezugszeichen DI bezeichnet) ausgebildet werden. Hierzu ist zu bemerken, dass der Innenkanal 3 sich in Einsteckrichtung S des Steckerteils 4 insgesamt insbesondere verjüngt, wobei in einigen Abschnitten A2, A4, A6, A8 der Innendurchmesser DI jeweils konstant bleibt. Im axial - in Einsteckrichtung S gesehen - letzten Abschnitt A9 liegt allerdings ein erweiterter Innendurchmesser DI zur Aufnahme des Verriegelungselements 9 vor. Damit ergeben sich bei etwa gleichbleibendem Außendurchmesser DA unterschiedliche Wandstärken W.

Durch den Spritzgießprozess kann auch - wie in allen Ausführungen des Formteils 1 gezeigt - beim Anspritzen am Grundkörper 2, insbesondere endständig, bevorzugt auch ein radial aufgeweiteter Flanschansatz 12 ausgebildet werden, der insbesondere eine polygonale Außenkontur 13 zum manuellen Angriff oder zum Angriff eines Werkzeugs aufweisen kann. Im Gegensatz zu den dargestellten Formteilausführungen ist es dabei möglich und vorteilhaft, wenn das Einspritzen in einem axialen Bereich (z. B. Abschnitte A1, A2, A3) des Grundkörpers 2 erfolgt, in dem sich der Flanschansatz 12 befindet.
Das Einspritzen durch die Einspritzöffnung kann bevorzugt auch - wie in Fig. 3 und 7 dargestellt - in einem Abschnitt A8 oder in einem Bereich eines Abschnitts des Grundkörpers 2 erfolgen, in dem der Grundkörper 2 (abgesehen von der "Wandstärke" im Bereich des Flanschansatzes 12) eine maximale Wandstärke W aufweist. Die Anspritzstelle kann dabei - wie in Fig. 3 und Fig. 7 gezeigt - vorteilhafterweise weniger als ein Drittel der Gesamtlänge L des Schraubteils 1 von dem freien Ende des Schraubteils 1 entfernt liegen, das dem Flanschansatz 12 gegenüber liegt. Für die sich an diesem Ende befindende, filigran ausgebildete Außenringwulst 7 ist die Effizienz des Nachdrucks dann besonders hoch. Bei diesem Abschnitt A8 handelt es sich insbesondere um einen zylindrisch ausgebildeten Abschnitt A8 des Grundkörpers 2, der zur Stützung und/oder Führung des Steckerteils 4 dient. Es ist in diesem Abschnitt A8 möglich, dass das Steckerteil 4 im Montagezustand ein Spiel SP zum Formteil 1 aufweist, so dass in diesem Abschnitt A8, wenn der Anschnitt dort erfolgt, es mit Vorteil nicht notwendig ist, technologisch aufwändige Nacharbeiten, insbesondere zur Entfernung von Angussgraten und/oder zur Glättung der Oberfläche vorzunehmen.
Die Massetemperatur kann beim Spritzgießen etwa 100 EC bis 350 EC betragen, der Spritzdruck etwa 400 bar bis 1600 bar und die Werkzeugtemperatur etwa 40 EC bis 160 EC. Bei der Verarbeitung von Thermoplasten ist die Schnecke relativ heiß, um das thermoplastische Material zu schmelzen. Das Werkzeug hingegen ist relativ kalt, um das gerade entstandene Formteil 1 abzukühlen. Dies wird als Kaltkanalverfahren bezeichnet. Bei der Verarbeitung von Duroplasten muss die Temperatur der Plastifiziereinheit dem Fließ-Härtungsverhalten angepasst werden und liegt daher im Allgemeinen niedriger als bei Thermoplasten, während das Werkzeug heißer gehalten werden muss als die Spritzeinheit, damit die Masse dort aushärten kann. Dies wird als Heißkanalverfahren bezeichnet. Das Kaltkanalverfahren wird gegenüber dem Heißkanalverfahren erfindungsgemäß bevorzugt.
Eine beim Erstarren entstehende Volumenschwindung des Formteils 1 kann durch einen vor der Entnahme aufgebrachten Nachdruck ausgeglichen werden. Bei der Herstellung von Formteilen 1 im erfindungsgemäßen Verfahren waren dabei im Vergleich zu den Formteilen, die nach dem eingangs genannten bekannten Verfahren hergestellt wurden, eine höhere Effizienz des Nachdrucks, d. h. insbesondere ein höherer Füllgrad der Kavität, der sich im fertigen Formteil 1 in einer besseren Bindenahtfestigkeit und Bauteilfestigkeit sowie in einer um etwa 10 Prozent höheren Dichte ausdrückte. Die Dichte ist nahezu mit der theoretisch berechneten Dichte identisch.

Fig. 6 und 7 zeigen eine zweite Ausführung eines Formteils 1, das die gleiche Raumgestalt wie das als erstes Ausführungsbeispiel dargestellte Formteil 1 aufweist und nach einem Spritzgussverfahren der erfindungsgemäßen Art herstellbar ist.

Die beiden exemplarisch dargestellten Formteilausführungen unterscheiden sich durch die Art, wie das Einspritzen in die Kavität, insbesondere wie der Übergang von einem Zuströmkanal für die plastifizierte polymere Masse in den Werkzeugbereich der Kavität zur Ausbildung des Formteils erfolgt. Die Gestaltung dieses Bereichs und damit die Art der Anbindung des zu spritzgießenden Formteils 1 an einen von diesem nach dem Spritzgießprozess zu entfernenden Restkörper, den sogenannten Anguss, nennt man in der Spritzgießtechnik Anschnitt.
Wie bereits erwähnt, sind die Angüsse, welche mit dem Bezugszeichen 100 bezeichnet sind, außer in Fig. 4 und 5 zeichnerisch mit dargestellt. Erfindungsgemäß sind solche stoffschlüssigen Anbindungen des Formteils 1 an den Anguss 100 bevorzugt, die in der Spritzgießtechnik mit Tunnel-, Ring-, Scheiben- oder Schirmanschnitt bezeichnet werden. Der Anguss 100 muss, da er sich fest am Bauteil befindet, in einem nachträglichen Schritt vom Formteil 1 abgetrennt werden, was durch eine mechanische Bearbeitung, wie ein Stanzen, Bohren, Fräsen, Drehen, Schneiden und/oder Honen, oder durch eine thermische Bearbeitung, wie ein Schneidbrennen oder Laserschneiden umgesetzt werden kann.

Bei der Ausführung des Formteils 1 gemäß Fig. 1 bis 3 wurde ein sogenannter Tunnelanschnitt realisiert. Das Einspritzen in die Kavität erfolgte durch mindestens zwei, konkret drei, axial- oder konkret zentralsymmetrisch angeordnete Einspritzöffnungen, die auf dem ringförmigen Innenquerschnitt des Formteils 1 in bevorzugter Ausführung umfangsgemäß um 120E zueinander versetzt lagen, was sich insbesondere in der in Fig. 3 dargestellten Form des Angusses 100 widerspiegelt. Zwei, drei vier oder fünf Anspritzpunkte sind möglich. Die Angusskanäle verliefen speichenartig radial von innen nach außen, wobei aber auch eine tangentiale Neigung, also ein nicht im rechten Winkel zur Tangente an den Umfang des Innenkanals 3 stehender Verlauf vorgesehen werden kann, ohne dass der Rahmen der Erfindung verlassen wird. Bei einem solchen Anschnitt entsteht etwa mittig zwischen den Einspritzstellen jeweils eine Bindenaht.

Gemäß der zweiten Ausführung ist das Einspritzen, wie Fig. 6 und 7 zeigen, durch eine einzige ringförmig umlaufende Einspritzöffnung erfolgt. Diese Art der stoffschlüssigen Anbindung des Formteils 1 an den Anguss 100 nennt man Scheibenanschnitt, wobei zuweilen dafür auch der Begriff Ringanschnitt verwendet wird. Üblicherweise (und auch hier) verwendet man jedoch den Begriff Ringanschnitt als übergeordneten allgemeineren Begriff, um darunter einen Scheibenanschnitt (Fig. 6, 7), einen Schirmanschnitt (mit konischer Ausbildung des Angusses 100) und einen sogenannten Kranzanschnitt (ringförmig von außen) zu subsumieren. Bei all diesen Anschnitten entsteht im Formteil 1 vorteilhafterweise keine Bindenaht. Insbesondere durch einen Scheibenanschnitt kann in einem erfindungsgemäßen Verfahren bei kurzen Fließwegen der polymeren Masse an der Anspritzstelle 200 eine maximale Anbindungsfläche zwischen Formteil 1 und Anguss 100 und damit eine sehr hohe Homogenität der Formteilstruktur erzielt werden.
Der Anschnitt, insbesondere also die Anspritzstelle 200, an der das Einspritzen durch die Einspritzöffnung erfolgt, kann bevorzugt zwischen einem Bereich zur Anlage einer Umfangsdichtung 5, 6 und einem Bereich zur Halterung und/oder Arretierung des Steckerteils 4 oder zwischen zwei Bereichen zur Halterung und/oder Arretierung des Steckerteils 4 liegen.
Generell ist es von Vorteil, wenn diese Anspritzstelle 200 weniger als ein Drittel der Gesamtlänge L des Schraubteils 1 von einem der beiden freien Enden des Schraubteils 1 entfernt ist, insbesondere - wie für den Angussabschnitt A8 in Fig. 3 und Fig. 7 dargestellt - weniger als ein Drittel der Gesamtlänge L des Schraubteils 1 von dem freien Ende des Schraubteils 1 entfernt, das dem Flanschansatz 12 gegenüber liegt und an dem sich als filigrane konstruktive Struktur die Außenringwulst 7 befinden kann. Derartige filigrane Strukturen stellen wie das Außengewinde 10 und der Übergangsbereich 16 vom Flanschansatz 12 zum Grundkörper 2 Bereiche des Schraubteils 1 mit maximaler mechanischer Belastung dar. Eine geringe Entfernung der Einspritzöffnung von diesen Bereichen bewirkt kurze Fließwege und sichert somit eine optimal hohe und lokal überdurchschnittliche Festigkeit.
Die Erfindung ist nicht auf die dargestellten Ausführungsbeispiele beschränkt, sondern umfasst auch alle im Sinne der Erfindung gleichwirkenden Ausführungen. So ist es, wie bereits aus den vorstehenden Ausführungen hervorgeht, möglich, dass die Einspritzung auf andere Art und Weise realisiert werden kann als dargestellt. In diesem Zusammenhang sei besonders auf die aus Fig. 3 und 6 ersichtlichen Ausnehmungen in der Umfangsfläche des Innenkanals 3 verwiesen, die mit den Bezugszeichen 14 und 15 bezeichnet sind und die jeweils in den Abschnitten A3, A4 und somit teilweise in dem zylindrischen Abschnitt A4 liegen, der zur Anlage der Umfangsdichtung 5 dient, bzw. die in dem konischen Abschnitt A1 und teilweise in dem zylindrischen Abschnitt A2 zur Stützung und/oder Führung des Steckerteils 4 liegen. Dabei kann sich im Montagezustand, wie Fig. 4 zeigt, die Umfangsdichtung 5 auch - jedoch nicht unter Wandanlage - in dem letztgenannten Abschnitt A2 befinden. Die Ausnehmungen 14, 15 in der Umfangsfläche des Innenkanals 3 stellen bewusst eingebrachte Leckagepfade für ein insbesondere gasförmiges Fluid dar, zu dessen Führung eine Armatur mit dem Formteil 1 vorzugsweise eingesetzt werden kann. Diese Ausnehmungen 14, 15 stellen ebenfalls Bereiche mit einer besonderen Eignung zur Anbindung des Angusses 100 dar, wobei es sich, wenngleich das Einspritzen durch die Einspritzöffnung in einem Abschnitt A4 erfolgt, der integral zur Anlage der Umfangsdichtung 5 dient, jedoch bei der Ausnehmung 15 um einen Teilbereich handelt, in dem die Umfangsdichtung 5 nicht anliegt. Die Ausnehmungen 15 im Abschnittsbereich A3/A4 sind somit insbesondere für einen Ringanschnitt, und die Ausnehmungen im Abschnittsbereich A1/A2 für einen Schirmanschnitt geeignet. Zur Gewährleistung eines ausreichenden Leckagestroms können die Ausnehmungen 14, 15 in einem solchen Fall breiter und/oder tiefer gestaltet werden, als die in der Zeichnung dargestellten.
Des Weiteren kann der Fachmann zusätzliche vorteilhafte technische Maßnahmen vorsehen, ohne dass der Rahmen der Erfindung verlassen wird. So zeigen beispielsweise Fig. 2 und 3, dass die Anspritzstellen 200 des Schraubteils 1 erfindungsgemäß in Vertiefungen 18 auf dem Umfang des Innenkanals 3 angeordnet sind. Besonders deutlich sind diese Vertiefungen 18 in Fig. 2 zu sehen. Sie sind im Bereich eines Abschnitts A8 angeordnet, in dem der Grundkörper 2 eine maximale Wandstärke W aufweist, insbesondere in einem Abschnitt A8, der zur Stützung und/oder Führung des Steckerteils 4 dient.
Gemäß Fig. 3 ergibt sich eine Höhe H der Vertiefung 18 als halber Wert der Differenz zwischen dem Innendurchmesser D₁ des Schraubteils 1 an der Anspritzstelle 200 (rechte Figurenhälfte) und dem Innendurchmesser D₀ des Schraubteils 3 an der Stelle im Abschnitt A8, wo sich kein Anguss 100 befindet (linke Figurenhälfte). Die Höhe H kann vorzugsweise etwa bis zu 0,5 mm, insbesondere 0,25 mm bis 0,35 mm, betragen. Nach dem Abtrennen des Angusses 100 kann in der Vertiefung ein Grat stehen bleiben, ohne dass dadurch die Funktionalität des erfindungsgemäßen Schraubteils 1 in irgendeiner Weise negativ beeinträchtigt würde. Nacharbeit kann so mit Vorteil vermieden werden. Der Innendurchmesser D₀ des Schraubteils 1 an der Stelle im Abschnitt A8, wo sich kein Anguss 100 befindet (linke Figurenhälfte) kann dabei bevorzugt genauso groß sein wie der Innendurchmesser DI des sich in axialer Richtung X-X anschließenden nächsten zylindrisch ausgebildeten Abschnitts A6.
Für einen in den Ausführungsbeispielen nicht dargestellten Fall, dass im Innenkanal 3 des Formteils 1 innere Ausnehmungen, wie Umfangsnuten, und/oder innere Stufen, wie radiale Vor- oder Rücksprünge, ausgebildet sind, die in beiden Richtungen der Längsachse X-X des Formteils 1 einen hinterschnittenen Abschnitt, also einen Rücksprung, gegenüber dem übrigen Querschnitt des Innenkanals 3 bewirken, ist festzustellen, dass diese - wie die Halte- und die Dichtungsabschnitte - nicht für einen Anschnitt geeignet sind, da in einem derart hinterschnittenen Abschnitt ein Anguss 100 nur sehr schwer abgetrennt werden kann. Auch die konischen Abschnitte A1, A3, A5, A7 zur Stützung und/oder Führung des Steckerteils 4 als solche sind mit der beschriebenen Ausnahme der Ausnehmungen 15 weniger dazu geeignet, dort eine Masseeinspritzung vorzunehmen.
Des Weiteren kann als zusätzliche vorteilhafte technische Maßnahme zur Erhöhung der Belastbarkeit des Formteils 1 beim Einschrauben in das Bauteil 11 die Kontur des äußeren Übergangs 16 des Flanschansatzes 12 zum Grundkörper 2, in dem - wie Fig. 4 und 5 zeigen - eine äußere Umfangsdichtung 17 für das erfindungsgemäße Formteil 1 angeordnet werden kann, nicht wie bekannt durch einen Kreisbogenabschnitt, insbesondere den Abschnitt eines Viertelkreises, sondern nach der Art einer sogenannten Baumwurzelgeometrie gestaltet werden. Dadurch liegt eine Geometrie des als Kehle bzw. Nut für die Dichtung 17 ausgebildeten Übergangs 16 vor, die einen Abbau von Kerbspannungen bewirkt, und es erhöht sich vorteilhafterweise ein Torsionsmoment, dem das Formteil 1 beim Einschrauben in das Bauteil 11 standhält, um etwa bis zu weiteren 20 Prozent gegenüber einem Bauteil mit der herkömmlichen Form.

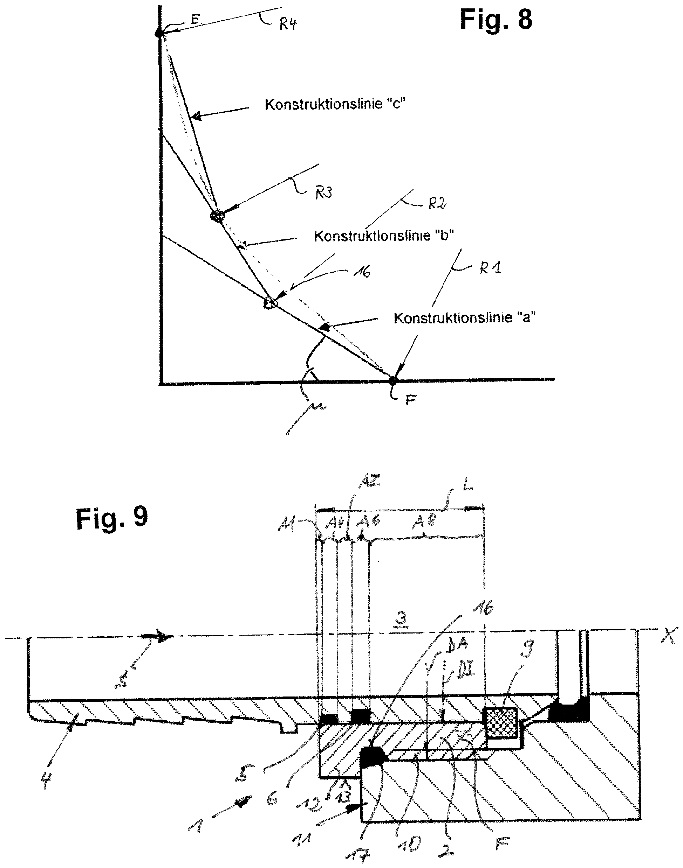

Fig. 8 veranschaulicht die Konstruktion dieser sogenannten Baumwurzelgeometrie für den genannten Übergang 16. Die Konstruktion erfolgt auf folgende Weise: Zunächst wird in einem ersten Schritt eine Konstruktionslinie "a" erzeugt, die jeweils in einem Winkel µ zum Flanschansatz 12 oder zum Grundkörper 2 steht, wobei der Winkel µ insbesondere im Bereich zwischen 30° und 60°, vorzugsweise bei 45°, liegen kann. Im zweiten Schritt wird eine Konstruktionslinie "b" erzeugt, die von der Mitte der Hypotenuse des im ersten Schritt gebildeten Dreiecks ausgeht. Diese Konstruktionslinie wird entweder zum Flanschansatz 12 oder zum Grundkörper 2 derart geführt, dass wiederum ein gleichschenkliges Dreieck entsteht. Im dritten Schritt wird eine Konstruktionslinie "c" erzeugt, die von der Mitte der Hypotenuse des im zweiten Schritt gebildeten Dreiecks ausgeht, wobei auch hier ein gleichschenkliges Dreieck erzeugt wird, wie Fig. 8 zeigt. Diese Konstruktionsweise ist an sich bekannt und wird als "Methode der Zugdreiecke" bezeichnet. In einem abschließenden vierten Schritt werden dann die Endpunkte E, F der Konstruktionslinien "c" und "a" durch eine Bogenlinie 18 verbunden, welche die im ersten bis dritten Schritt gebildete polygonale Struktur approximativ verrundet. Hierzu können insbesondere mehrere Kreisbögen verwendet werden, die tangential ineinander übergehen. Derartigen Kreisbögen exemplarisch entsprechende Radien sind in Fig. 8 mit R1, R2, R3 und R4 bezeichnet. Ebenso ist die Konstruktion nicht auf drei Konstruktionslinien beschränkt, sondern es kann eine beliebige weitere Anzahl hinzugefügt werden, bevorzugt in Abhängigkeit vom Winkel µ.

Ein Formteil 1, das sämtliche der vorstehend beschriebenen Merkmale aufweisen kann, zeichnet sich dadurch aus, dass der Grundkörper 2 an der Wandung des Innenkanals 3 Anspritzstellen 200 aufweist, die in einem Abschnitt A1, A2, A5, A7, A8, A8 oder in einem Bereich 14, 15 eines Abschnitts A1/A2, A3/A4 angeordnet sind, wobei der ganze Abschnitt oder nur der entsprechende Bereich nicht der Anlage einer Umfangsdichtung 5, 6 oder der Halterung und/oder Arretierung des Steckerteils 4 dient. Diese Anspritzstellen sind in der Zeichnung mit dem Bezugszeichen 200 bezeichnet und je nach der Art der Bearbeitung, die zum Entfernen des Angusses vorgenommen wurde, maskroskopisch oder mikroskopisch als Angussreste oder zumindest durch eine Schliffaufnahme, die einen strahlenförmigen von der Einspritzstelle ausgehenden Faserverlauf im Formteil 1 verdeutlicht, erkennbar.
Bei dem in Fig. 9 dargestellten Formteil 1 weist der hohlzylindrische Grundkörper 2 einen Innenkanal 3 auf, dessen Innendurchmesser über seine gesamte Länge L - bis auf den konisch ausgeführten Einführungsabschnitt A1 - konstant ist. Auch hier reihen sich in axialer Richtung X-X Abschnitte mit jeweils unterschiedlicher Funktion aneinander, die entsprechend ihrer Funktion zur Anlage der beiden dargestellten Umfangsdichtungen 5, 6 sowie zur Stützung und/oder Führung des Steckerteils 4 mit den Bezugszeichen A1, A4, AZ, A6, und A8 bezeichnet sind. Der Zwischenabschnitt AZ entspricht dabei dem Abschnitt A5 in den Ausführungen gemäß Fig. 4 und 5, ist jedoch nicht konisch ausgebildet. Ein spezieller Abschnitt A9 zur direkten oder indirekten Halterung und/oder Arretierung des Steckerteils 4, und damit auch entsprechende, filigran ausgebildete Strukturen, sind nicht vorhanden. Das Verriegelungselement 9 für das Steckerteil 4 hintergreift hier im Montagezustand das Ende des Formteils 1, das dem Flanschansatz 12 gegenüber liegt. Es ist folglich zu erkennen, dass nicht jedem Abschnitt im Innenkanal 3 ein eigener Innendurchmesser DI entsprechen muss, auch wenn dies in den anderen Ausführungen der Erfindung bevorzugt so ist.

Auch diese Ausführung des Formteils 1 wird dadurch hergestellt, dass das Einspritzen in die Kavität der Herstellungsform radial durch Einspritzöffnung aus dem Innenkanal 3 nach außen in einem Abschnitt oder in einem Bereich eines Abschnitts erfolgt, der nicht der Anlage einer Umfangsdichtung 5, 6 dient. Prädestiniert dafür ist hierbei wiederum der zylindrisch ausgebildete Abschnitt A8 des Grundkörpers 2, der zur Stützung und/oder Führung des Steckerteils 4 dient. Auch der Zwischenabschnitt AZ zwischen den beiden Anlageabschnitten A4, A6 für die Dichtungen 5, 6 ist prinzipiell geeignet, jedoch würde beim Einstecken des Steckerteils 4 dann zumindest eine Dichtung 6 diesen Abschnitt AZ samt einem eventuell darin noch befindlichen Angussrest überfahren, was wegen einer damit verbundenen Gefahr der Beschädigung der Dichtung 6 als weniger vorteilhaft anzusehen ist. Allerdings könnten ausgleichend in einem solchen Zwischenabschnitt AZ wie beschrieben - Vertiefungen 18 im Umfang des Innenkanals 3 vorgesehen werden, oder die Nachbearbeitung nach dem Entfernen des Angusses 100 müsste sorgfältiger erfolgen. Bei dieser Ausführung kann die Einspritzstelle 200 nicht nur im letzten Drittel der Länge L (gesehen in Einsteckrichtung S), sondern auch in deren mittleren Drittel liegen.

Für die Geometrie des Übergangs 16 vom Flanschansatz 12 zum Grundkörper 2 des Formteils 1, der wiederum als Dichtungskehle bzw. Dichtungsnut ausgebildet ist, kann auch hier bevorzugt die beschriebene Baumwurzelstruktur vorgesehen sein. Wenn als äußere Umfangsdichtung 17 ein O-Ring eingesetzt wird, erhöht sich dabei durch die voneinander im unverpressten Zustand der Dichtung 17 abweichenden Konturen von Dichtung 17 und Nut 16 die Dichtwirkung.

### Bezugszeichen

- 1: Formteil
- 2: Grundkörper von 1
- 3: Innenkanal in 1
- 4: Steckerteil (Fig. 4, 5, 9)
- 5: Umfangsdichtung auf 4 (Fig. 4, 5, 9)
- 6: Umfangsdichtung auf 4 (Fig. 4, 5, 9)
- 7: Außenringwulst von 1 für 8
- 8: Haltekäfig für 4 (Fig. 4)
- 9: Verriegelungselement von 4 (Fig. 4, 9)
- 10: Außengewinde auf 1
- 11: Bauteil zur Aufnahme von 1
- 12: Flanschansatz von 2
- 13: Außenkontur von 12
- 14: Ausnehmung in A1, A2
- 15: Ausnehmung in A3, A4
- 16: Übergang 12/2
- 17: äußere Umfangsdichtung auf 1
- 18: Vertiefung für 200 im Umfang von 3

- 100: Anguss an 1
- 200: Anspritzstelle von 1

- A1: erster Abschnitt in 3
- A2: zweiter Abschnitt in 3
- A3: dritter Abschnitt in 3
- A4: vierter Abschnitt in 3
- A5: fünfter Abschnitt in 3
- A6: sechster Abschnitt in 3
- A7: siebter Abschnitt in 3
- A8: achter Abschnitt in 3
- A9: neunter Abschnitt in 3
- AZ: Zwischenabschnitt zwischen A4 und A6 (Fig. 9)
- DA: Außendurchmesser von 1
- DI: Innendurchmesser von 1
- D₀: Innendurchmesser von 3 in A8 (im Bereich ohne 200)
- D₁: Innendurchmesser von 3 in A8 (im Bereich mit 200)
- F: Faser
- H: Höhe von 18
- L: Länge von 1, 2, 3
- S: Einsteckrichtung von 4
- SP: Spiel in 3 zwischen 4 und 1
- W: Wandstärke von 2
- X-X: Längsachse von 1

## Patentansprüche

1. Verfahren zur Herstellung eines Formteils (1) mit ringförmigem Querschnitt, wie einer Schraube, einer Mutter, eines Muffenteils, eines Rohrsteckers, eines Rohrverbinders oder dergleichen, wobei das Formteil (1) einen hohlzylindrischen Grundkörper (2) aufweist, in dessem zur dichtenden Aufnahme eines Steckerteils (4) bestimmtem Innenkanal (3) sich in axialer Richtung (X-X) Abschnitte (A1, A2, A3, A4, A5, A6, A7, A8, A9, AZ) mit unterschiedlicher Funktion, und zwar zur Anlage einer Umfangsdichtung (5, 6), zur direkten oder indirekten Halterung und/oder Arretierung des Steckerteils (4) und/oder zur Stützung und/oder Führung des Steckerteils (4) aneinander reihen, welche mit unterschiedlichen Innendurchmessern (DI) mit und/oder mit unterschiedlicher Wandstärke (W) ausgebildet werden, wobei beim Anspritzen am Grundkörper (2) ein radial aufgeweiteter endständiger Flanschansatz (12) sowie mindestens ein Innengewinde und/oder ein Außengewinde (10) ausgebildet werden, wobei eine Fasern (F) enthaltende plastifizierte polymere Masse durch mindestens eine Einspritzöffnung eines Formwerkzeugs in eine Kavität des Formwerkzeugs eingespritzt und nach einem Erstarren der polymeren Masse das Formteil (1) aus dem Werkzeug entformt wird, **dadurch gekennzeichnet, dass** das Einspritzen in die Kavität radial durch die mindestens eine Einspritzöffnung aus dem Innenkanal (3) nach außen in einem Abschnitt (A1, A2, A3, A5, A7, A8) oder in einem Bereich (14, 15) eines Abschnitts (A1, A2, A3, A4, A5, A6, A7, A8, A9, AZ) erfolgt, der nicht der Anlage einer Umfangsdichtung (5, 6) oder der Halterung und/oder Arretierung des Steckerteils (4) dient, wobei das Einspritzen durch die mindestens eine Einspritzöffnung in einem Abschnitt (A8) oder in einem Bereich eines Abschnitts des Grundkörpers (2) erfolgt, in dem der Grundkörper (2) eine maximale Wandstärke (W) aufweist, und wobei sich die mindestens eine Einspritzöffnung an einer Anspritzstelle (200) befindet, die in einer Vertiefung (18) auf dem Umfang des Innenkanals (3) angeordnet ist.

2. Verfahren nach Anspruch 1,
**dadurch gekennzeichnet, dass** das Einspritzen durch die Einspritzöffnung in einem Teilbereich (14) eines Abschnitts (A4) zur Anlage einer Umfangsdichtung (5) erfolgt, in dem die Umfangsdichtung (5) nicht anliegt.

3. Verfahren nach Anspruch 1 oder 2,
**dadurch gekennzeichnet, dass** das Einspritzen durch die Einspritzöffnung in einem Abschnitt erfolgt, der zwischen einem Bereich zur Anlage einer Umfangsdichtung (5, 6) und einem Bereich zur Halterung und/oder Arretierung des Steckerteils (4) oder der zwischen zwei Bereichen zur Halterung und/oder Arretierung des Steckerteils (4) liegt.

4. Verfahren nach einem der Ansprüche 1 bis 3,
**dadurch gekennzeichnet, dass** das Einspritzen durch die Einspritzöffnung in einem axialen Bereich (A1, A2, A3) des Grundkörpers (12) erfolgt, in dem sich der Flanschansatz (12) befindet.

5. Verfahren zur Herstellung eines Formteils (1) mit ringförmigem Querschnitt, wie einer Schraube, einer Mutter, eines Muffenteils, eines Rohrsteckers, eines Rohrverbinders oder dergleichen, wobei das Formteil (1) einen hohlzylindrischen Grundkörper (2) aufweist, in dessem zur dichtenden Aufnahme eines Steckerteils (4) bestimmtem Innenkanal (3) sich in axialer Richtung (X-X) Abschnitte (A1, A2, A3, A4, A5, A6, A7, A8, A9, AZ) mit unterschiedlicher Funktion, und zwar zur Anlage einer Umfangsdichtung (5, 6), zur direkten oder indirekten Halterung und/oder Arretierung des Steckerteils (4) und/oder zur Stützung und/oder Führung des Steckerteils (4) aneinander reihen, welche mit unterschiedlichen Innendurchmessern (DI) und/oder mit unterschiedlicher Wandstärke (W) ausgebildet werden, wobei beim Anspritzen am Grundkörper (2) ein radial aufgeweiteter endständiger Flanschansatz (12) sowie mindestens ein Innengewinde und/oder ein Außengewinde (10) ausgebildet werden, wobei eine Fasern (F) enthaltende plastifizierte polymere Masse durch mindestens eine Einspritzöffnung eines Formwerkzeugs in eine Kavität des Formwerkzeugs eingespritzt und nach einem Erstarren der polymeren Masse das Formteil (1) aus dem Werkzeug entformt wird, **dadurch gekennzeichnet, dass** das Einspritzen in die Kavität radial durch die mindestens eine Einspritzöffnung aus dem Innenkanal (3) nach außen in einem Abschnitt (A1, A2, A3, A5, A7, A8) oder in einem Bereich (14,15) eines Abschnitts (A1, A2, A3, A4, A5, A6, A7, A8, A9, AZ) erfolgt, der nicht der Anlage einer Umfangsdichtung (5, 6) oder der Halterung und/oder Arretierung des Steckerteils (4) dient, wobei das Einspritzen durch die mindestens eine Einspritzöffnung in einem Abschnitt (A8) oder in einem Bereich eines Abschnitts des Grundkörpers (2) erfolgt, in dem der Grundkörper (2) eine maximale Wandstärke (W) aufweist, und wobei sich die mindestens eine Einspritzöffnung an einer Anspritzstelle (200) befindet, die weniger als ein Drittel der Gesamtlänge (L) des Schraubteils (1) von einem der beiden freien Enden des Schraubteils (1) entfernt ist, und zwar von dem freien Ende des Schraubteils (1) entfernt, das dem Flanschansatz (12) gegenüber liegt und an dem sich als filigrane konstruktive Struktur eine Außenringwulst (7) befindet.

6. Verfahren nach einem der Ansprüche 1 bis 5,
**dadurch gekennzeichnet, dass** das Einspritzen durch die Einspritzöffnung in einem insbesondere zylindrisch ausgebildeten Abschnitt (A8) des Grundkörpers (2) erfolgt, der zur Stützung und/oder Führung des Steckerteils (4) dient.

7. Verfahren nach einem der Ansprüche 1 bis 6,
**dadurch gekennzeichnet, dass** das Einspritzen in die Kavität derart erfolgt, dass sich die Fasern (F) im Grundkörper (2) vorwiegend parallel zur axialen Richtung (X-X) ausrichten.

8. Verfahren nach einem der Ansprüche 1 bis 7,
**dadurch gekennzeichnet, dass** das Einspritzen in die Kavität im Tunnel-, oder Ring-, vorzugsweise im Scheiben- oder Schirmanschnitt, erfolgt.

9. Verfahren nach Anspruch 8,
**dadurch gekennzeichnet, dass** das Einspritzen in die Kavität im Tunnelanschnitt durch mindestens zwei, vorzugsweise drei oder vier, axial- oder zentralsymmetrisch angeordnete Einspritzöffnungen erfolgt.

10. Verfahren nach einem der Ansprüche 1 bis 9,
**dadurch gekennzeichnet, dass** die plastifizierte polymere Masse ein Kunststoff ist, welcher eine thermoplastische Matrix des Formteils (1) bildet, insbesondere ein Polyphtalamid (PPA) oder ein Polyethersulfon (PES).

11. Verfahren nach einem der Ansprüche 1 bis 10,
**dadurch gekennzeichnet, dass** beim Einspritzen in die Kavität an dem Formteil (1) innere Ausnehmungen, äußere Ausnehmungen, wie Umfangsnuten, innere Stufen oder äußere Stufen, wie radiale Vor- oder Rücksprünge, und/oder konische Abschnitte (A1, A3, A5, A7) ausgebildet werden.

12. Verfahren nach einem der Ansprüche 1 bis 11,
**dadurch gekennzeichnet, dass** die plastifizierte polymere Masse einen Volumenanteil an Fasern (F) im Bereich von 2,5 bis 75 Prozent, vorzugsweise einen Masseanteil im Bereich von 30 bis 70 Prozent, insbesondere 50, 60 oder 65 Masseprozent an Glasfasern, enthält.

13. Verfahren nach einem der Ansprüche 1 bis 12,
**dadurch gekennzeichnet, dass** die Fasern (F), insbesondere in einer Ausführung als Glasfasern, eine Länge im Bereich von 0,1 mm bis 10 mm, vorzugsweise im Bereich von 0,2 mm bis 0,5 mm, aufweisen.

14. Verfahren nach einem der Ansprüche 1 bis 13,
**dadurch gekennzeichnet, dass** die Fasern (F) einen mittleren Durchmesser im Bereich von etwa 3 µm bis 35 µm, vorzugsweise im Bereich von 5 µm bis 20 µm, aufweisen.

15. Verfahren nach einem der Ansprüche 1 bis 14,
**dadurch gekennzeichnet, dass** die Kontur eines äußeren Übergangs (16) des Flanschansatzes (12) zum Grundkörper (2) nach der "Methode der Zugdreiecke", vorzugsweise mit zusätzlicher Verrundung, geformt wird.

## Claims

1. Method for the production of a moulded part (1) having an annular cross section, such as a screw, a nut, a bush part, a pipe plug, a pipe connector, or the like, wherein the moulded part (1) has a hollow-cylindrical main body (2), portions (A1, A2, A3, A4, A5, A6, A7, A8, A9, AZ) having dissimilar functions, specifically for bringing to bear a circumferential seal (5, 6), for mounting and/or arresting the plug part (4) in a direct or indirect manner, and/or for supporting and/or guiding the plug part (4), are sequentially disposed in the axial direction (X-X) in the internal duct (3), specified for receiving a plug part (4) in a sealing manner, of said main cylindrical body (2), said portions (A1, A2, A3, A4, A5, A6, A7, A8, A9, AZ) being configured having dissimilar internal diameters (DI) and/or having dissimilar wall thicknesses (W), wherein in the moulding to the main body (2) a radially widened flange appendage (12) at the end, and at least one internal thread and/or one external thread (10) are configured, wherein a plasticized polymer compound containing fibres (F) is injected through at least one injection opening of a moulding tool into a cavity of the moulding tool, and the moulded part (1) upon solidification of the polymer compound is de-moulded from the tool, **characterized in that** injecting into the cavity through the at least one injection opening is performed from the internal duct (3) in a radially outward manner in a portion (A1, A2, A3, A5, A7, A8), or in a region (14, 15) of a portion (A1, A2, A3, A4, A5, A6, A7, A8, A9, AZ), which does not serve for bringing to bear a circumferential seal (5, 6), or for mounting and/or arresting the plug part (4), wherein injecting through the at least one injection opening is performed in a portion (A8), or in a region of a portion, of the main body (2) in which the main body (2) has a maximum wall thickness (W), and wherein the at least one injection opening is located at an injection point (200) which is disposed in a depression (18) on the circumference of the internal duct (3).

2. Method according to Claim 1,
**characterized in that** injecting through the injection opening is performed in a part-region (14) of a portion (A4) for bringing to bear a circumferential seal (5) in which the circumferential seal (5) does not come to bear.

3. Method according to either of Claims 1 and 2, **characterized in that** injecting through the injection opening is performed in a portion which lies between a region for bringing to bear a circumferential seal (5, 6) and a region for mounting and/or arresting the plug part (4), or which lies between two regions for mounting and/or arresting the plug part (4).

4. Method according to one of Claims 1 to 3, **characterized in that** injecting through the injection opening is performed in an axial region (A1, A2, A3) of the main body (12) in which the flange appendage (12) is located.

5. Method for the production of a moulded part (1) having an annular cross section, such as a screw, a nut, a bush part, a pipe plug, a pipe connector, or the like, wherein the moulded part (1) has a hollow-cylindrical main body (2), portions (A1, A2, A3, A4, A5, A6, A7, A8, A9, AZ) having dissimilar functions, specifically for bringing to bear a circumferential seal (5, 6), for mounting and/or arresting the plug part (4) in a direct or indirect manner, and/or for supporting and/or guiding the plug part (4), are sequentially disposed in the axial direction (X-X) in the internal duct (3), specified for receiving a plug part (4) in a sealing manner, of said main cylindrical body (2), said portions (A1, A2, A3, A4, A5, A6, A7, A8, A9, AZ) being configured having dissimilar internal diameters (DI) and/or having dissimilar wall thicknesses (W), wherein in the moulding to the main body (2) a radially widened flange appendage (12) at the end, and at least one internal thread and/or one external thread (10) are configured, wherein a plasticized polymer compound containing fibres (F) is injected through at least one injection opening of a moulding tool into a cavity of the moulding tool, and the moulded part (1) upon solidification of the polymer compound is de-moulded from the tool, **characterized in that** injecting into the cavity through the at least one injection opening is performed from the internal duct (3) in a radially outward manner in a portion (A1, A2, A3, A5, A7, A8), or in a region (14, 15) of a portion (A1, A2, A3, A4, A5, A6, A7, A8, A9, AZ), which does not serve for bringing to bear a circumferential seal (5, 6), or for mounting and/or arresting the plug part (4), wherein injecting through the at least one injection opening is performed in a portion (A8), or in a region of a portion, of the main body (2) in which the main body (2) has a maximum wall thickness (W), and wherein the at least one injection opening is located at an injection point (200) which is remote from one of the two free ends of the screw part (1), specifically from the free end of the screw part (1) which is opposite the flange appendage (12) and on which an external annular bead (7) is located as a structure which is delicate in terms of construction, by not more than one third of the overall length (L) of the screw part (1).

6. Method according to one of Claims 1 to 5, **characterized in that** injecting through the injection opening is performed in an in particular cylindrically configured portion (A8) of the main body (2) which serves for supporting and/or guiding the plug part (4).

7. Method according to one of Claims 1 to 6, **characterized in that** injecting into the cavity is performed in such a manner that the fibres (F) in the main body (2) are oriented so as to be largely parallel with the axial direction (X-X).

8. Method according to one of Claims 1 to 7, **characterized in that** injecting into the cavity is performed by way of tunnel or ring gates, preferably disc or umbrella gates.

9. Method according to Claim 8,
**characterized in that** injecting into the cavity by way of tunnel gates is performed through at least two, preferably three or four, injection openings that are disposed in an axially symmetrical or centrally symmetrical manner.

10. Method according to one of Claims 1 to 9, **characterized in that** the plasticized polymer compound is a plastic material which forms a thermoplastic matrix of the moulded part (1), in particular is a polyphthalamide (PPA) or a polyether sulfone (PES).

11. Method according to one of Claims 1 to 10, **characterized in that** internal clearances, external clearances such as circumferential grooves, internal steps or external steps such as radial protrusions or recesses, and/or conical portions (A1, A3, A5, A7) are configured on the moulded part (1) when injecting into the cavity.

12. Method according to one of Claims 1 to 11, **characterized in that** the plasticized polymer compound has a proportion of fibres (F) in the range from 2.5 to 75 per cent by volume, preferably a proportion of glass fibres in the range from 30 to 70 per cent by mass, in particular 50, 60, or 65 per cent by mass.

13. Method according to one of Claims 1 to 12, **characterized in that** the fibres (F), in particular in an embodiment as glass fibres, have a length in the range from 0.1 mm to 10 mm, preferably in the range from 0.2 mm to 0.5 mm.

14. Method according to one of Claims 1 to 13, **characterized in that** the fibres (F) have a mean diameter in the range from approximately 3 µm to 35 µm, preferably in the range from 5 µm to 20 µm.

15. Method according to one of Claims 1 to 14, **characterized in that** the contour of an external transition (16) of the flange appendage (12) towards the main body (2) is shaped according to the "method of traction triangles", preferably having an additional rounded feature.

## Revendications

1. Procédé de fabrication d'une pièce moulée (1) de section transversale annulaire, comme une vis, un écrou, une partie de manchon, une fiche tubulaire, un connecteur tubulaire ou analogue, dans lequel la pièce moulée (1) présente un corps de base cylindrique creux (2), dans le canal intérieur (3) duquel, destiné à recevoir de façon étanche une partie de connecteur (4), se succèdent en direction axiale (X-X) des parties (A1, A2, A3, A4, A5, A6, A7, A8, A9, AZ) avec une fonction différente, notamment pour la pose d'un joint d'étanchéité périphérique (5, 6), pour le support direct ou indirect et/ou le blocage de la partie de connecteur (4) et/ou pour l'appui et/ou le guidage de la partie de connecteur (4), qui sont formées avec des diamètres intérieurs différents (DI) et/ou avec une épaisseur de paroi différente (W), dans lequel on forme lors de la projection sur le corps de base (2) un rebord de bride d'extrémité (12) élargi radialement ainsi qu'au moins un filet intérieur et/ou un filet extérieur (10), dans lequel on injecte une masse polymère plastifiée contenant des fibres (F) à travers au moins une ouverture d'injection d'un outil de moulage dans une cavité de l'outil de moulage et on démoule la pièce moulée (1) hors de l'outil après une solidification de la masse polymère, **caractérisé en ce que** l'on effectue l'injection dans la cavité radialement à travers ladite au moins une ouverture d'injection à partir du canal intérieur (3) vers l'extérieur dans une partie (A1, A2, A3, A5, A7, A8) ou dans une région (14, 15) d'une partie (A1, A2, A3, A4, A5, A6, A7, A8, A9, AZ), qui n'est pas destinée à la pose d'un joint d'étanchéité périphérique (5, 6) ou au support et/ou au blocage de la partie de connecteur (4), dans lequel on effectue l'injection à travers ladite au moins une ouverture d'injection dans une partie (A8) ou dans une région d'une partie du corps de base (2), dans laquelle le corps de base (2) présente une épaisseur de paroi maximale (W), et dans lequel ladite au moins une ouverture d'injection se trouve en un point de projection (200), qui est disposé dans un creux (18) sur la périphérie du canal intérieur (3).

2. Procédé selon la revendication 1, **caractérisé en ce que** l'on effectue l'injection à travers l'ouverture d'injection dans une région partielle (14) d'une partie (A4) destinée à la pose d'un joint d'étanchéité périphérique (5), dans laquelle le joint d'étanchéité périphérique (5) n'est pas appliqué.

3. Procédé selon la revendication 1 ou 2, **caractérisé en ce que** l'on effectue l'injection à travers l'ouverture d'injection dans une partie, qui est située entre une région destinée à la pose d'un joint d'étanchéité périphérique (5, 6) et une région destinée au support et/ou au blocage de la partie de connecteur (4) ou qui est située entre deux régions destinées au support et/ou au blocage de la partie de connecteur (4).

4. Procédé selon l'une quelconque des revendications 1 à 3, **caractérisé en ce que** l'on effectue l'injection à travers l'ouverture d'injection dans une région axiale (A1, A2, A3) du corps de base (2), dans laquelle se trouve le rebord de bride (12).

5. Procédé de fabrication d'une pièce moulée (1) de section transversale annulaire, comme une vis, un écrou, une partie de manchon, une fiche tubulaire, un connecteur tubulaire ou analogue, dans lequel la pièce moulée (1) présente un corps de base cylindrique creux (2), dans le canal intérieur (3) duquel, destiné à recevoir de façon étanche une partie de connecteur (4), se succèdent en direction axiale (X-X) des parties (A1, A2, A3, A4, A5, A6, A7, A8, A9, AZ) avec une fonction différente, notamment pour la pose d'un joint d'étanchéité périphérique (5, 6), pour le support direct ou indirect et/ou le blocage de la partie de connecteur (4) et/ou pour l'appui et/ou le guidage de la partie de connecteur (4), qui sont formées avec des diamètres intérieurs différents (DI) et/ou avec une épaisseur de paroi différente (W), dans lequel on forme lors de la projection sur le corps de base (2) un rebord de bride d'extrémité (12) élargi radialement ainsi qu'au moins un filet intérieur et/ou un filet extérieur (10), dans lequel on injecte une masse polymère plastifiée contenant des fibres (F) à travers au moins une ouverture d'injection d'un outil de moulage dans une cavité de l'outil de moulage et on démoule la pièce moulée (1) hors de l'outil après une solidification de la masse polymère, **caractérisé en ce que** l'on effectue l'injection dans la cavité radialement à travers ladite au moins une ouverture d'injection à partir du canal intérieur (3) vers l'extérieur dans une partie (A1, A2, A3, A5, A7, A8) ou dans une région (14, 15) d'une partie (A1, A2, A3, A4, A5, A6, A7, A8, A9, AZ), qui n'est pas destinée à la pose d'un joint d'étanchéité périphérique (5, 6) ou au support et/ou au blocage de la partie de connecteur (4), dans lequel on effectue l'injection à travers ladite au moins une ouverture d'injection dans une partie (A8) ou dans une région d'une partie du corps de base (2), dans laquelle le corps de base (2) présente une épaisseur de paroi maximale (W), et dans lequel ladite au moins une ouverture d'injection se trouve en un point de projection (200), qui est éloigné de moins d'un tiers de la longueur totale (L) de la pièce filetée (1) d'une des deux extrémités libres de la pièce filetée (1), notamment de l'extrémité libre de la pièce filetée (1), qui est située à l'opposé du rebord de bride (12) et sur laquelle se trouve un bourrelet annulaire extérieur (7) en tant que structure de construction filigrane.

6. Procédé selon l'une quelconque des revendications 1 à 5, **caractérisé en ce que** l'on effectue l'injection à travers l'ouverture d'injection dans une partie en particulier de forme cylindrique (A8) du corps de base (2), qui est destinée à l'appui et/ou au guidage de la partie de connecteur (4).

7. Procédé selon l'une quelconque des revendications 1 à 6, **caractérisé en ce que** l'on effectue l'injection dans la cavité, de telle manière que les fibres (F) dans le corps de base (2) s'orientent principalement parallèlement à la direction axiale (X-X).

8. Procédé selon l'une quelconque des revendications 1 à 7, **caractérisé en ce que** l'on effectue l'injection dans la cavité par une entame en tunnel ou en anneau, de préférence en disque ou en parapluie.

9. Procédé selon la revendication 8, **caractérisé en ce que** l'on effectue l'injection dans la cavité par une entame en tunnel à travers au moins deux, de préférence trois ou quatre ouvertures d'injection disposées avec la symétrie axiale ou centrale.

10. Procédé selon l'une quelconque des revendications 1 à 9, **caractérisé en ce que** la masse polymère plastifiée est une matière plastique, qui forme une matrice thermoplastique de la pièce moulée (1), en particulier un polyphtalamide (PPA) ou un polyéthersulfone (PES).

11. Procédé selon l'une quelconque des revendications 1 à 10, **caractérisé en ce que** lors de l'injection dans la cavité on forme sur la pièce moulée (1) des évidements internes, des évidements externes, comme des rainures périphériques, des étages internes ou des étages externes, comme des saillies radiales ou des retraits radiaux, et/ou des parties coniques (A1, A3, A5, A7).

12. Procédé selon l'une quelconque des revendications 1 à 11, **caractérisé en ce que** la masse polymère plastifiée contient une proportion en volume de fibres (F) comprise dans la plage de 2,5 à 75 pour cent, de préférence une proportion en masse comprise dans la plage de 30 à 70 pour cent, en particulier 50, 60 ou 65 pour cent en masse de fibres de verre.

13. Procédé selon l'une quelconque des revendications 1 à 12, **caractérisé en ce que** les fibres (F), en particulier dans une exécution en fibres de verre, présentent une longueur comprise dans la plage de 0,1 mm à 10 mm, de préférence dans la plage de 0,2 mm à 0,5 mm.

14. Procédé selon l'une quelconque des revendications 1 à 13, **caractérisé en ce que** les fibres (F) présentent un diamètre moyen compris dans la plage d'environ 3 µm à 35 µm, de préférence dans la plage de 5 µm à 20 µm.

15. Procédé selon l'une quelconque des revendications 1 à 14, **caractérisé en ce que** le contour d'une transition extérieure (16) du rebord de bride (12) au corps de base (2) est formé par la "Méthode du triangle de traction", de préférence avec arrondi supplémentaire.
